# FASCICULE DE BREVET EUROPEEN

(11) **EP 2 741 907 B1**
(45) Date de publication et mention de la délivrance du brevet: **20.05.2015**
(21) Numéro de dépôt: 12750558.4
(22) Date de dépôt: 06.08.2012
(51) Int. Cl.: B29C 70/22, B29C 70/24, B29C 70/54, B64C 25/02, B64C 25/60, F16C 7/00, F16C 7/02, B29C 70/86, B29C 65/72, B29K 105/08, B29C 70/48

(54) **PROCEDE DE FABRICATION D'UNE PIECE STRUCTURALE EN MATERIAU COMPOSITE COMPRENANT UNE CHAPE DOUBLE ORIENTEE RADIALEMENT**
VERFAHREN ZUR HERSTELLUNG EINES STRUKTURTEILS AUS EINEM VERBUNDSTOFF MIT EINEM RADIAL AUSGERICHTETEN DOPPELJOCH
METHOD FOR MANUFACTURING A STRUCTURAL PART MADE OF A COMPOSITE MATERIAL AND INCLUDING A RADIALLY ORIENTED DOUBLE YOKE

(30) Priorité: 09.08.2011 FR 1157251
(43) Date de publication de la demande: 18.06.2014
(73) Titulaire: Messier-Bugatti-Dowty, 78140 Vélizy-Villacoublay (FR)
(72) Inventeur: MASSON, Richard, F-78140 Velizy Villacoublay (FR); ROUGIER, Thierry, F-78140 Velizy Villacoublay (FR); DUNLEAVY, Patrick, F-78140 Velizy Villacoublay (FR)
(74) Mandataire: Parzy, Benjamin Alain
(86) Numéro de dépôt international: PCT/EP2012/065370
(87) Numéro de publication internationale: WO 2013/020955

(56) Documents cités:
- WO-A1-2011/088992
- FR-A1- 2 953 160
- FR-A1- 2 953 443
- US-A1- 2007 152 105

## Description

L'invention concerne un procédé de fabrication en matériau composite d'une pièce structurale comprenant une présentant deux ailes orientées radialement par rapport à une direction principale de la portion du corps de la pièce structurale portant cette chape double.

### ARRIERE PLAN DE L'INVENTION

L'invention concerne la fabrication d'une pièce comprenant un corps dont une portion au moins s'étend selon une direction principale longitudinale en ayant une section transversale délimitant un contour fermé et dans laquelle cette portion est pourvue de deux ailes de chapes s'étendant parallèlement l'une à l'autre selon une direction radiale.

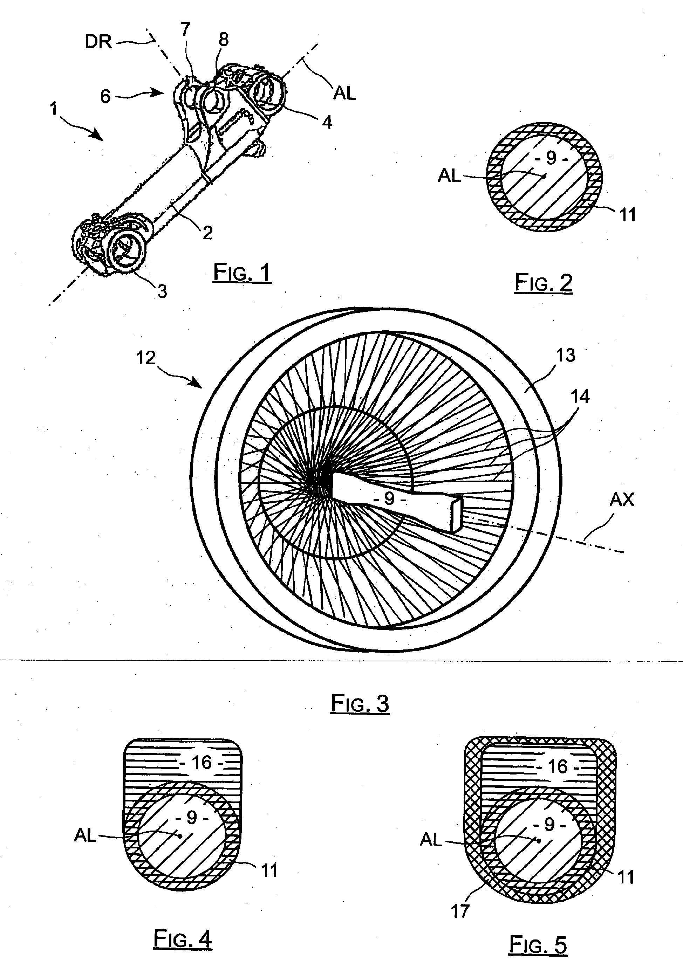

Une telle pièce dont il est connu de la fabriquer en alliage métallique correspond par exemple à un balancier d'atterrisseur d'aéronef tel que représenté dans la figure 1.

Un tel balancier connu qui est fabriqué en alliage est repéré par 1 dans la figure 1. Il comporte un corps principal 2, s'étendant selon un axe longitudinal AL, et dont chaque extrémité est pourvue d'une chape double s'étendant également selon cet axe longitudinal AL, ces deux chapes doubles étant repérées par 3 et 4.

Comme visible dans la figure 1, ce balancier comporte une troisième chape double 6, qui est portée par une portion du corps principal 2 située entre ses deux extrémités 3 et 4. Cette chape intermédiaire double, est constituée de deux ailes, repérées par 7 et 8, qui s'étendent parallèlement l'une à l'autre selon une direction radiale DR par rapport à l'axe longitudinal AL.

Cette chape intermédiaire est destinée à recevoir un axe non représenté, s'étendant perpendiculairement aux axes AL et DR en étant espacé de l'axe longitudinal AL. A cet effet, chaque aile 7, 8 comporte un perçage, ces deux perçages étant alignés l'un avec l'autre.

Le document FR 2 953 443 A1 divulgue un procédé de fabrication d'une bielle en matériau composite ayant une extrêmité en forme de chape double par tressage autour d'un mandrin, imprégnation et polymérisation de la structure fibreuse puis usinage pour former la chape.

Le document WO 2011088992 A1 divulgue un procédé de fabrication d'une pièce composite comportant une chape, incorporée à la pièce sous la forme d'un insert fibreux.

Le but de l'invention est de proposer un procédé de fabrication d'une telle pièce structurale en matériau composite constitué de fibres rigidifiantes et d'une matrice.

### OBJET DE L'INVENTION

Le but de l'invention est de proposer une solution pour remédier aux inconvénients ci-dessus.

### RESUME DE L'INVENTION

A cet effet, l'invention a pour objet un procédé de fabrication en matériau composite d'un élément structurel tel qu'un balancier d'atterrisseur d'aéronef, comprenant un corps dont une portion s'étend selon un axe longitudinal en présentant une section transversale délimitant un contour fermé tout en étant pourvu d'une chape double comportant deux ailes qui s'étendent parallèlement à une direction radiale par rapport à l'axe longitudinal, la chape double étant destinée à recevoir un axe mécanique orienté perpendiculairement à l'axe longitudinal tout en étant espacé de cet axe longitudinal, ce procédé comportant les étapes de :
- former un premier mandrin ;
- appliquer une ou des premières couches de fibres tressées sur le premier mandrin en utilisant une machine de tressage pour que ces couches s'étendent tout autour de ce premier mandrin et sur toute sa longueur ;
- rapporter sur l'ensemble formé par le premier mandrin et chaque première couche qu'il porte, un second élément de mandrin s'étendant dans une région située entre les deux ailes de la chape à former ;
- appliquer une ou des secondes couches de fibres tressées sur l'ensemble constitué par le premier mandrin avec chaque première couche qu'il porte ainsi que le second élément de mandrin rapporté ;
- injecter de la résine dans les différentes couches de fibres qui ont été appliquées et polymériser cette résine pour former une pièce brute ;
- usiner la pièce brute dans la région de la chape double à réaliser, de manière à former une entaille traversant chaque seconde couche pour séparer l'une de l'autre les deux ailes de la chape double ;
- perçage de chaque aile de la chape double.

L'invention permet ainsi de réaliser une pièce comportant un corps ayant une section fermée et portant une chape double orientée radialement par rapport à la direction principale de ce corps.

L'invention concerne également un procédé tel que défini ci-dessus, comportant en outre, préalablement à l'étape d'injection de résine, une opération de piquage et/ou de couture pour solidariser entre elles les première et seconde couches.

L'invention concerne également un procédé tel que défini ci-dessus, dans lequel l'opération de piquage et/ou de couture est réalisée de manière à solidariser les première et seconde couches dans le voisinage des ailes de la chape double.

L'invention concerne également un procédé tel que défini ci-dessus, comportant l'application de plusieurs secondes couches, et dans lequel une partie de ces secondes couches s'étend uniquement sur une portion de la longueur de l'ensemble formé par le premier mandrin portant les premières couches et le second élément de mandrin.

### BREVE DESCRIPTION DES FIGURES

La figure 1 est une vue d'ensemble d'une bielle à double chape radiale de l'Etat de la technique ;
La figure 2 est une vue en coupe transversale montrant une étape d'application de premières couches de fibres tressées sur un premier mandrin conformément à l'invention ;
La figure 3 est une vue d'ensemble montrant schématiquement une machine de tressage utilisée dans le procédé selon l'invention ;
La figure 4 est une vue en coupe transversale au niveau de la chape double intermédiaire montrant l'implantation d'un second élément de mandrin conformément à l'invention ;
La figure 5 est une vue en coupe transversale au niveau de la chape double intermédiaire correspondant à l'application de secondes couches de fibres tressées conformément à l'invention ;
La figure 6 est une vue en coupe transversale au niveau de la chape double intermédiaire illustrant une opération de piquage et/ou de couture solidarisant les premières couches tressées aux secondes couches tressées conformément à l'invention ;
La figure 7 est une vue en coupe transversale au niveau de la chape double intermédiaire montrant la bielle après,usinage et mise en place de bagues dans les ailes de la chape double intermédiaire ;
La figure 8 est une vue en coupe longitudinale d'une bielle fabriquée conformément à l'invention et illustrant notamment les dispositions des différentes couches de fibres tressées ;
La figure 9 est une vue schématique montrant en perspective une bielle fabriquée conformément à l'invention.

### DESCRIPTION DETAILLEE DE L'INVENTION

L'idée à la base de l'invention est de fabriquer la pièce structurale par tressage en appliquant deux séries de couches de fibres tressées, pour ensuite usiner localement uniquement la deuxième famille de couches tressées au niveau de la chape, tout en laissant intacte la première famille de couches tressées. La pièce structurale présente ainsi une section transversale fermée au niveau de la chape, ce qui lui confère une résistance élevée, notamment en torsion.

L'invention consiste ainsi à réaliser un premier mandrin, repéré par 9 dans la figure 2, et à appliquer sur ce premier mandrin une ou plusieurs premières couches de fibres tressées, cette ou ces premières couches étant repérées par 11.

L'application de ces premières couches de fibres tressées est assurée en utilisant une machine de tressage telle que la machine 12 de la figure 3. Cette machine de tressage comprend principalement un anneau circonférentiel 13 centré sur un axe AX, et cet anneau porte à sa face arrière une série de bobines de fibres de carbone, ces fibres de carbone étant repérées par 14.

Concrètement, le mandrin 9 est engagé dans la machine de tressage de telle manière que l'axe longitudinal AL de ce mandrin s'étende selon l'axe principal AX de la machine, et il est déplacé le long de l'axe AX à travers l'anneau 13. L'ensemble est actionné par différents moyens pilotés et asservis non représentés, de sorte qu'une chaussette de fibres de carbone se tresse autour de la face externe de révolution du mandrin 9 tout en venant se plaquer à cette face externe. Une ou plusieurs premières couches de fibres tressées sont ainsi appliquées les unes sur les autres, au cours de différentes passes, sur toute la longueur du mandrin.

Une fois que ces premières couches 11 de fibres tressées ont été appliquées, on fixe à l'ensemble formé par le premier mandrin 9 et les premières couches 11, un second élément de mandrin 16. Comme illustré dans la figure 4, ce second élément de mandrin 16 présente des dimensions et un encombrement correspondant au volume situé entre les deux ailes radiales de la chape double et orientée radialement que l'on souhaite réaliser.

Autrement dit, ce second élément de mandrin 16 est significativement plus court que le premier mandrin 9, et il est également plus étroit et de moindre hauteur. Le premier mandrin 9 et le second élément de mandrin 16 peuvent être fabriqués eux-mêmes à partir de matériau composite de type couches de tissu préimprégné, ou autre, pour constituer des composants creux. Ils peuvent éventuellement être fabriqués à partir de mousse pour constituer au contraire des composants de mandrin de type pleins.

Comme illustré sur la figure 4 le second élément de mandrin 16 est rapporté à la face externe des premières couches tressées 11, au niveau de la chape double radiale à réaliser, en étant par exemple fixé par collage.

Après avoir rapporté le second élément de mandrin 16, l'ensemble constitué par le premier mandrin 9 avec les premières couches tressées 11 qui l'entourent et le deuxième élément de mandrin rapporté 16, est à nouveau installé dans la machine de tressage.

Cet ensemble est ensuite déplacé le long de l'axe AX de la machine de tressage pour appliquer une ou plusieurs secondes couches de fibres tressées, qui, cette fois, entourent les premières couches de fibres tressées 9 ainsi que le second élément de mandrin 16, comme illustré schématiquement à la figure 5.

Ces secondes couches peuvent éventuellement être tressées seulement sur une portion de la pièce comprenant la chape. Dans ce cas, néanmoins, la dernière des secondes couches tressées s'étend avantageusement sur toute la longueur du mandrin, de manière à recouvrir l'ensemble de la pièce produite.

D'une manière générale, la machine de tressage peut avantageusement être paramétrée pour déposer une plus grande quantité de fibres dans la région de la chape, tant en ce qui concerne les premières couches tressées que les secondes couches tressées.

Une fois que les secondes couches tressées ont été appliquées, une opération additionnelle peut être prévue pour réaliser un piquage ou une couture solidarisant les premières couches 11 aux secondes couches 16. Cette opération de piquage ou de couture réalisant comme on le comprend des points orientés radialement par rapport à l'axe longitudinal AL, repérés par 18 dans les figures, et traversant l'épaisseur des premières et secondes couches tressées pour les lier les unes aux autres.

Avantageusement, ces points de piquage sont réalisés dans les zones les plus sollicitées, comme par exemple au niveau de la base des ailes de la chape double intermédiaire, afin d'accroître la tenue mécanique des ailes en ce qui concerne leur cohésion avec le reste de l'élément de structure.

Une fois que l'opération de couture ou de piquage éventuelle est terminée, la résine est injectée dans l'ensemble des couches tressées qui ont été déposées, avant de procéder à la polymérisation de cette résine, ces opérations étant par exemple réalisées avec un moule à injecter et/ou autoclave.

La polymérisation complète de la résine correspond ainsi à la fabrication de la pièce brute, avant usinage. L'opération d'usinage consiste principalement à réaliser une entaille dans les secondes couches tressées, au niveau de la portion de paroi que forment ces secondes couches qui est la plus éloignée de l'axe AX.

Plus concrètement, la pièce brute a une forme générale allongée comportant une protubérance radiale au niveau de la chape radiale à réaliser, cette protubérance radiale ayant une forme de bloc renfermant le second élément de mandrin 16. L'usinage consiste à réaliser une entaille de la région centrale de la portion supérieure de ce bloc.

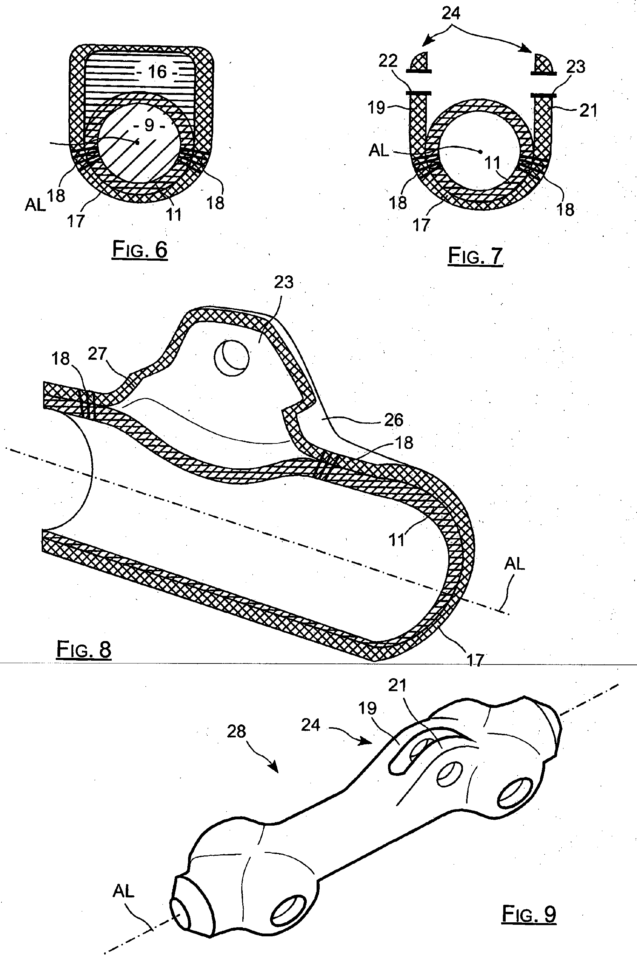

Comme illustré dans la figure 7, l'entaille réalisée par usinage permet ainsi de libérer l'espace correspondant au second élément de mandrin 16, afin de constituer les deux ailes de chapes qui sont repérées par 19 et 21 dans les figures 7 et 8, ces deux ailes 19 et 21 étant formées l'une et l'autre par les secondes couches de fibres tressées 16, pour constituer conjointement la chape double qui est repérée par 24 dans la figure 7.

On réalise ensuite un perçage dans l'aile 19 et un autre perçage dans l'aile 21, avant de mettre en place une bague métallique dans chacun de ces perçages, ces bagues étant repérées par 22 et 23.

Comme représenté schématiquement en figure 8, l'entaille usinée dans les secondes couches 16 pour séparer les deux ailes 19 et 21 l'une de l'autre est réalisée sur une hauteur inférieure à la hauteur des ailes de chapes. L'entaille usinée présente une profondeur qui est minimale, pour permettre le passage de la tête de la pièce devant être engagée entre les ailes 19 et 21 de la chape double radiale. Comme on l'aura compris, cette tête de pièce non représentée est solidarisée à la chape par un axe mécanique non représenté traversant les deux ailes 19 et 21 et la tête de cette pièce engagée entre ces ailes.

Autrement dit, l'entaille est réalisée sur une hauteur suffisamment faible pour que subsiste au niveau de la base des ailes 19 et 21 deux portions de parois 26 et 27 visibles en figure 8, formées par les secondes couches 16. Ces deux portions de parois sont orientées transversalement, pour réunir les bases de ces ailes 19 et 21 afin de renforcer leur tenue mécanique latérale.

Comme on l'aura compris, le premier mandrin 9 et le second élément de mandrin 16 peuvent être retirés après usinage, comme dans l'exemple des figures. Il est également possible, dans le cas où il s'agit d'un mandrin et d'un élément de mandrin de type creux et fabriqués en matériau composite, de les laisser en place puisque leur présence n'est pas gênante dans la pièce définitive.

D'une manière générale, le procédé selon l'invention permet de réaliser une pièce en matériau composite tressé comportant un corps principal dont une portion a une forme de bras tubulaire, présentant donc une section de type.fermée, mais qui est en outre pourvu d'une chape double orientée radialement par rapport à la direction générale de ce bras. La figure 9 montre un exemple d'une pièce structurelle de ce type, sous forme d'un balancier d'atterrisseur d'aéronef 28.

## Revendications

1. Procédé de fabrication en matériau composite d'un élément structurel tel qu'un balancier (28) d'atterrisseur d'aéronef, comprenant un corps dont une portion s'étend selon un axe longitudinal (AL) en présentant une section transversale délimitant un contour fermé tout en étant pourvu d'une chape double (24) comportant deux ailes (19, 21) qui s'étendent parallèlement à une direction radiale par rapport à l'axe longitudinal (AL), la chape double (24) étant destinée à recevoir un axe mécanique orienté perpendiculairement à l'axe longitudinal (AL) tout en étant espacé de cet axe longitudinal (AL), ce procédé comportant les étapes de :
- former un premier mandrin (9) ;
- appliquer une ou des premières couches de fibres tressées (11) sur le premier mandrin (9) en utilisant une machine de tressage (12) pour que ces couches s'étendent tout autour de ce premier mandrin (9) et sur toute sa longueur ;
- rapporter sur l'ensemble (9, 11) formé par le premier mandrin (9) et chaque première couche (11) qu'il porte, un second élément de mandrin (16) s'étendant dans une région située entre les deux ailes (19, 21) de la chape (24) à former ;
- appliquer une ou des secondes couches de fibres tressées (17) sur l'ensemble constitué par le premier mandrin (9) avec chaque première couche (11) qu'il porte ainsi que le second élément de mandrin rapporté (16) ;
- injecter de la résine dans les différentes couches de fibres (11, 17) -qui ont été appliquées et polymériser cette résine pour former une pièce brute ;
- usiner la pièce brute dans la région de la chape double à réaliser, de manière à former une entaille traversant chaque seconde couche (17) pour séparer l'une de l'autre les deux ailes (19, 21) de la chape double (24) ;
- perçage de chaque aile (19, 21) de la chape double (24).

2. Procédé selon la revendication 1, comportant en outre, préalablement à l'étape d'injection de résine, une opération de piquage et/ou de couture pour solidariser entre elles les première(s) et seconde(s) couches (11, 17).

3. Procédé selon la revendication 2, dans lequel l'opération de piquage et/ou de couture est réalisée de manière à solidariser les première(s) et seconde(s) couches (11, 17) dans le voisinage des ailes (19, 21) de la chape double (24).

4. Procédé selon l'une des revendications précédentes, comportant l'application de plusieurs secondes couches (17), et dans lequel une partie de ces secondes couches (17) s'étend uniquement sur une portion de la longueur de l'ensemble formé par le premier mandrin (9) portant les premières couches (11) et le second élément de mandrin (16).

## Patentansprüche

1. Verfahren zum Herstellen eines Strukturelements, wie zum Beispiel eines Schwenkträgers (28) eines Flugzeugfahrwerks, aus einem Verbundwerkstoff, umfassend einen Schaft, von dem sich ein Abschnitt entlang einer Längsachse (AL) erstreckt und dabei einen Querschnitt aufweist, der eine geschlossene Kontur begrenzt, wobei er mit einem Doppelgabelkopf (24) versehen ist, der zwei Schenkel (19, 21) umfasst, die sich parallel zu einer radialen Richtung in Bezug auf die Längsachse (AL) erstrecken, und wobei der Doppelgabelkopf (24) dazu bestimmt ist, eine mechanische Achse aufzunehmen, die senkrecht zur Längsachse (AL) ausgerichtet und dabei zu dieser Längsachse (AL) beabstandet ist, wobei dieses Verfahren die Schritte umfasst:
- Formen eines ersten Dorns (9),
- Aufbringen einer oder mehr Schichten (11) aus geflochtenen Fasern auf den ersten Dorn (9) unter Verwendung einer Flechtmaschine (12), damit sich diese Schichten ganz um diesen ersten Dorn (9) herum und über seine gesamte Länge erstrecken,
- Befestigen auf der aus dem ersten Dorn (9) und jeder von ihm getragenen ersten Schicht (11) gebildeten Einheit (9, 11) eines zweiten Dornelementes (16), das sich in einem Bereich erstreckt, der sich zwischen den beiden Schenkeln (19, 21) des auszubildenden Gabelkopfes (24) befindet,
- Aufbringen einer oder mehr zweiter Schichten (17) aus geflochtenen Fasern auf die Einheit, die aus dem ersten Dorn (9) mit jeder von ihm getragenen ersten Schicht (11) sowie dem daran befestigten zweiten Dornelement (16) gebildet ist,
- Einspritzen von Harz in die verschiedenen Faserschichten (11, 17), die aufgebracht wurden, und Polymerisieren dieses Harzes, um einen Rohling auszubilden,
- Bearbeiten des Rohlings im Bereich des zu erzeugenden Doppelgabelkopfes, derart, dass ein Einschnitt ausgebildet wird, der jede zweite Schicht (17) durchsetzt, um die beiden Schenkel (19, 21) des Doppelgabelkopfes (24) voneinander zu trennen,
- Durchbohren jedes Schenkels (19, 21) des Doppelgabelkopfes (24).

2. Verfahren nach Anspruch 1, ferner umfassend vor dem Schritt des Einspritzens des Harzes einen Heft- und/oder Nähvorgang, um die erste(n) und die zweite(n) Schicht(en) (11, 17) miteinander zu verbinden.

3. Verfahren nach Anspruch 2, wobei der Heft- und/oder Nähvorgang derart ausgeführt wird, dass die erste(n) und die zweite(n) Schicht(en) (11, 17) in der Nähe der Schenkel (19, 21) des Doppelgabelkopfes (24) verbunden werden.

4. Verfahren nach einem der vorhergehenden Ansprüche, umfassend das Aufbringen von mehreren zweiten Schichten (17), und wobei sich ein Teil dieser zweiten Schichten (17) nur auf einem Abschnitt der Länge der Einheit erstreckt, die aus dem die ersten Schichten (11) tragenden ersten Dorn (9) und dem zweiten Dornelement (16) gebildet ist.

## Claims

1. A method of fabricating a structural element such as an aircraft landing gear rocker beam (28) out of composite material, the element comprising a body having a portion that extends along a longitudinal axis (AL) while presenting a cross-section that defines a closed outline while also being provided with a clevis (24) comprising two lugs (19, 21) that extend parallel to a radial direction relative to the longitudinal axis (AL), the clevis (24) being for receiving a pin that is oriented perpendicularly to the longitudinal axis (AL) while being spaced apart from said longitudinal axis (AL), the method comprising the steps of:
· forming a first mandrel (9);
· applying one or more first braided fiber layers (11) on the first mandrel (9) by using a braiding machine (12) so that these layers extend all around the first mandrel (9) and all along its length;
· fitting a second mandrel element (16) on the assembly (9, 11) formed by the first mandrel (9) and each of the first layers (11) that it is carrying, the second mandrel element (16) extending in a region situated between the two lugs (19, 21) of the clevis (24) that is to be formed;
· applying one or more second braided fiber layers (17) on the assembly constituted by the first mandrel (9) with each of the first layers (11) that it carries together with the second mandrel element (16) fitted thereto;
· injecting the resin into the various fiber layers (11, 17) that have been applied, and polymerizing the resin in order to form a workpiece blank;
· machining the workpiece blank in the vicinity of the clevis that is to be made so as to cut away a region of each second layer (17) in order to separate the two lugs (19, 21) of the clevis (24) from each other; and
· making a hole in each lug (19, 21) of the clevis (24).

2. A method according to claim 1, further comprising, prior to the step of injecting resin, a stitching and/or sewing operation for bonding together the first and second layers (11, 17).

3. A method according to claim 2, wherein the stitching and/or sewing operation is performed so as to bond together the first and second layers (11, 17) in the vicinity of the lugs (19, 21) of the clevis (24).

4. A method according to any preceding claim, including applying a plurality of second layers (17), and wherein some of these second layers (17) extended solely over a portion of the length of the assembly formed by the first mandrel (9) carrying the first layers (11) and by the second mandrel element (16).
